# EUROPÄISCHE PATENTSCHRIFT

(11) **EP 3 891 042 B1**
(45) Veröffentlichungstag und Bekanntmachung des Hinweises auf die Patenterteilung: **24.11.2021**
(21) Anmeldenummer: 20722263.9
(22) Anmeldetag: 23.04.2020
(51) Int. Cl.: B62D 1/185

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 24.04.2019 DE 102019205861
(43) Veröffentlichungstag der Anmeldung: 13.10.2021
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); BLÄTTLER, Simon, 9472 Grabs (CH); KREUTZ, Daniel, 6800 Feldkirch (AT)
(74) Vertreter: thyssenkrupp Intellectual Property GmbH
(86) Internationale Anmeldenummer: PCT/EP2020/061280
(87) Internationale Veröffentlichungsnummer: WO 2020/216819

(56) Entgegenhaltungen:
- CN-Y- 2 789 100
- DE-A1-102015 216 326

## Beschreibung

### Stand der Technik

Die Erfindung betrifft eine Lenksäule für ein Kraftfahrzeug, umfassend eine Manteleinheit, in der eine Lenkspindel um eine Längsachse drehbar gelagert ist und die mindestens drei in Achsrichtung relativ zueinander verstellbare, teleskopartig ineinander geführte Mantelrohre aufweist, von denen eines ein Außenmantelrohr bildet, in dem mindestens ein Zwischenmantelrohr aufgenommen ist, in dem ein Innenmantelrohr aufgenommen ist, und umfassend eine Riegeleinrichtung, die eingerichtet ist um mindestens zwei der Mantelrohre in Richtung der Längsachse lösbar miteinander zu verriegeln.

Eine Lenksäule für ein Kraftfahrzeug weist eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist in der Manteleinheit einer Stelleinheit drehbar gelagert, die an der Fahrzeugkarosserie über eine Trageinheit gelagert ist, welche die Manteleinheit hält.

Es ist bekannt, die Lenksäule in Längsrichtung, d.h. in Achsrichtung der Lenkspindel bzw. in Richtung der Längsachse, verstellbar zu gestalten, um im manuellen Fahrbetrieb das Lenkrad in Bedienposition für einen bequemen Lenkeingriff an die Fahrerposition anzupassen. Beim autonomen Fahren, wenn kein manueller Lenkeingriff erfolgt, kann die Lenksäule in Längsrichtung möglichst weit zusammen geschoben bzw. eingefahren werden, und somit verkürzt werden, dass das Lenkrad in eine Verstauposition außerhalb der Bedienposition gebracht wird, und der Fahrzeuginnenraum für eine anderweitige Nutzung frei wird. Zum konventionellen, manuellen Fahren wird die Lenksäule in umgekehrter Richtung aus der Verstauposition ausgefahren.

Die Längsverstellung kann durch eine teleskopartige Anordnung von Mantelrohren realisiert werden. Um ein möglichst großes Verstellverhältnis zwischen der maximal auseinander gezogenen Bedienposition zu erreichen, und eine möglichst kompakte, kurze Abmessung in Verstauposition zu realisieren, ist es aus der gattungsgemäßen DE 10 2015 216326 A1 bekannt, mindestens drei Mantelrohre teleskopartig verschiebbar anzuordnen, nämlich ein äußeres Mantelrohr oder Außenmantelrohr, ein inneres Mantelrohr oder Innenmantelrohr, sowie mindestens ein koaxial dazwischen eingesetztes Zwischenmantelrohr. Zur Einstellung der Verstauposition können die drei Mantelrohre so weit zusammengeschoben, d.h. eingefahren werden, dass das Innen- und das oder die Zwischenmantelrohre in Achsrichtung im Wesentlichen im Außenmantelrohr versenkt sind. Vorzugsweise erfolgt das Ein- und Ausfahren mittels eines motorischen Verstellantriebs, der beispielsweise einen von einem Elektromotor antreibbaren Spindeltrieb umfasst, der an den Mantelrohren angreift.

Um die Mantelrohre beim Ein- und Ausfahren in einer definierten Reihenfolge relativ zueinander zu bewegen, ist es bekannt, dass jeweils zwei teleskopierende Mantelrohre eine Riegeleinrichtung aufweisen. Diese weist eine zwischen dem Innenmantelrohr und einem Zwischenmantelrohr angeordnete Rastvorrichtung auf, welche durch Einrasten im zusammen geschobenen Zustand eine lösbare Rastverbindung bildet, die durch Überwindung einer vorgegebenen Rastkraft in Längsrichtung gelöst werden kann. Dadurch, dass die zum Lösen der Rastvorrichtung erforderliche Rastkraft höher ist, als die beim Teleskopieren der Mantelrohre zu überwindende Reibungskraft, wird beim Ausfahren das Innenmantelrohr mit dem Zwischenmantelrohr zunächst gemeinsam aus dem Außenmantelrohr herausgefahren, bis das Zwischenmantelrohr vollständig ausgefahren ist und am Außenmantelrohr anschlägt. Danach wird die Rastverbindung gelöst und das Innenmantelrohr aus dem Zwischenmantelrohr herausbewegt.

Beim Ausfahren kann die Reihenfolge der relativen Teleskopbewegung der Mantelrohre somit definiert vorgegeben werden. Zum Einfahren wird die Verstellkraft in umgekehrter Längsrichtung auf das Innenmantelrohr ausgeübt. Dabei ist die im ausgefahrenen Zustand gelöste Rastvorrichtung inaktiv, so dass die Reihenfolge, in der die Mantelrohre zusammengeschoben werden, allein durch die momentane Reibungskraft zwischen jeweils zwei Mantelrohren bestimmt wird. Ist beispielsweise die Reibung zwischen Innen- und Zwischenmantelrohr größer als zwischen Zwischen- und Außenmantelrohr, taucht zuerst das Zwischenmantelrohr in das Außenmantelrohr ein, und danach das Innen- in das Zwischenmantelrohr, bis die Rastvorrichtung wieder einrasten kann. Ist dagegen die Reibung zwischen Innen- und Zwischenmantelrohr kleiner als zwischen Zwischen- und Außenmantelrohr, ergibt sich entsprechend eine umgekehrte Reihenfolge. Falls sich die Reibungskräfte zwischen den Mantelrohren jedoch nicht oder jedenfalls nicht deutlich unterscheiden, kann die Reihenfolge unklar sein, oder durch äußere Einflüsse wie Temperaturschwankungen, Verunreinigungen oder dergleichen beeinflusst werden, so dass kein eindeutig definiertes Ein- und Ausfahren der Mantelrohre erfolgt, was nachteilig ist.

Angesichts der vorangehend erläuterten Problematik ist es eine Aufgabe der vorliegenden Erfindung, eine Lenksäule mit einer verbesserten Riegeleinrichtung anzugeben, welche eine definierbare Reihenfolge beim relativen Bewegen der Mantelrohre ermöglicht.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Bei einer eingangs genannten Lenksäule für ein Kraftfahrzeug, umfassend eine Manteleinheit, in der eine Lenkspindel um eine Längsachse drehbar gelagert ist und die mindestens drei in Richtung der Längsachse relativ zueinander verstellbare, teleskopartig geführte Mantelrohre aufweist, von denen eines ein Außenmantelrohr bildet, in dem mindestens ein Zwischenmantelrohr aufgenommen ist, in dem ein Innenmantelrohr aufgenommen ist, und umfassend eine Riegeleinrichtung, die eingerichtet ist um mindestens zwei der Mantelrohre in Achsrichtung lösbar miteinander zu verriegeln, ist erfindungsgemäß vorgesehen, dass die Riegeleinrichtung umschaltbar ist zwischen einer Innensperrstellung und einer Außensperrstellung, wobei in der Innensperrstellung das Zwischenmantelrohr mit dem Innenmantelrohr verriegelt ist, und in der Außensperrstellung das Zwischenmantelrohr mit dem Außenmantelrohr verriegelt ist.

Die relativ zueinander verstellbaren, teleskopartig geführten Mantelrohre können in einer möglichen Ausführungsvariante derart ausgeführt sein, dass die Mantelrohre sich in Umfangsrichtung nicht vollständig umgreifen, beispielsweise einen offenen Umfangsbereich aufweisen oder sogar U-förmige oder L-förmige Querschnittsprofile aufweisen, die zueinander im Sinne der Erfindung teleskopartig geführt sind. Es kann beispielsweise vorgesehen sein, dass das Außenmantelrohr ein L-förmiges Querschnittsprofil aufweist, in dem ein U-förmiges Zwischenmantelrohr teleskopartig geführt aufgenommen ist und in dem ein geschlossenes Innenmantelrohr teleskopartig geführt aufgenommen ist, in dem die Lenkwelle drehbar gelagert ist. Das Außenmantelrohr könnte auch mit einem U-förmigen Querschnittsprofil ausgebildet sein. Das Zwischenmantelrohr kann auch mit einem L-förmigen Querschnittsprofil ausgebildet sein.

In einer weiteren möglichen Ausführungsvariante können die ineinander teleskopartig geführte Mantelrohre einen geschlossenen Querschnitt aufweisen oder einen solchen Querschnitt bilden.

Zwischen den teleskopartig geführten Mantelrohren können Wälzkörper oder Rollen angeordnet sein. Dadurch können diese entsprechend zueinander gelagert werden.

Die zueinander verstellbaren, teleskopartig geführten Mantelrohre können bevorzugt konzentrisch zueinander angeordnet und zueinander verschiebbar. Entsprechend können die Mantelrohre ineinander zueinander geführt sein.

Dass die Riegeleinrichtung umschaltbar ist, bedeutet, dass sie wahlweise immer nur in eine der beiden möglichen Sperrstellungen (Innen- oder Außensperrstellung) bringbar ist, also das Zwischenmantelrohr entweder mit dem Innenmantelrohr oder mit dem Außenmantelrohr verbunden ist, d.h. bezüglich einer relativen Teleskopbewegung in Richtung der Längsachse verriegelt ist. Dass ein Mantelrohr mit einem anderen Mantelrohr verriegelt ist, meint, dass die relative Bewegung in zumindest in einer Richtung der Längsachse blockiert ist, also die Mantelrohre zumindest nicht weiter relativ zueinander ein- oder ausgefahren werden können. Mit anderen Worten ist die relative Bewegung zumindest in einem Richtungssinn blockiert.

Die erfindungsgemäße Riegeleinrichtung ist an einem Zwischenmantelrohr angeordnet, und kann durch Umschalten wahlweise in zwei unterschiedliche funktionale Zustände gebracht werden, nämlich die Innensperrstellung, auch als Innenverriegelung bezeichnet, oder die Außensperrstellung, auch als Außenverriegelung bezeichnet. In der Innensperrstellung ist das Zwischenmantelrohr mit dem darin geführten Innenmantelrohr in Längsrichtung verbunden, und dabei in dem Außenmantelrohr teleskopierend verstellbar. Bei einer Umschaltung wird die Innensperrstellung gelöst, und die Außensperrstellung aktiviert, in der das Zwischenmantelrohr mit dem Außenmantelrohr, in dem es aufgenommen ist, bezüglich der Längsrichtung verbunden ist. Dabei ist das Innenmantelrohr in dem Zwischenmantelrohr verstellbar.

Während die im Stand der Technik bekannte Rastvorrichtung nur jeweils zwei Mantelrohre - Zwischen- und Innenmantelrohr oder Zwischen- und Außenmantelrohr - durch passives Einrasten aufgrund der ausgeübten Verstellkraft lösbar verbinden kann, kann die erfindungsgemäße Riegeleinrichtung die Teleskopbewegung eines Zwischenmantelrohrs in Beziehung zum Innenmantelrohr und zum Außenmantelrohr aktiv definiert sperren oder freigeben. Daraus resultiert der Vorteil, dass durch entsprechendes Umschalten der Riegeleinrichtung eine definierte Reihenfolge der relativen Bewegung de Mantelrohre sowohl beim Einfahren als auch beim Ausfahren vorgegeben werden kann.

Die erfindungsgemäße Riegeleinrichtung kann in einer Manteleinheit mit drei Mantelrohren realisiert sein, bei der nur ein Zwischenmantelrohr zwischen Außen- und Innenmantelrohr angeordnet ist. Eine Realisierung bei einer Teleskopanordnung mit vier oder mehr Mantelrohren ist ebenfalls möglich, die entsprechend zwei oder mehr Zwischenmantelrohre aufweist. Dabei bildet jeweils ein äußeres Mantelrohr, welchen ein Zwischenmantelrohr aufnimmt, ein Außenmantelrohr, und analog ein inneres Mantelrohr, welches von dem Zwischenmantelrohr aufgenommen wird, ein Innenmantelrohr im Sinne der Erfindung.

Eine vorteilhafte Ausgestaltung ist, dass das Innenmantelrohr ein Betätigungsmittel aufweist, welches eingerichtet ist, die Riegeleinrichtung in die Außensperrstellung umzuschalten, und/oder das Außenmantelrohr ein Betätigungsmittel aufweist, welches eingerichtet ist, die Riegeleinrichtung in die Innensperrstellung umzuschalten. Dabei kann vorgesehen sein, dass ein Betätigungsmittel des Innenmantelrohrs eingerichtet ist, die Riegeleinrichtung in Abhängigkeit von einer vorgegebenen ersten Relativposition von Zwischenmantelrohr und Außenmantelrohr in die Außensperrstellung umzuschalten, und/oder ein Betätigungsmittel des Außenmantelrohrs eingerichtet ist, die Riegeleinrichtung in Abhängigkeit von einer vorgegebenen zweiten Relativposition von Zwischenmantelrohr und Außenmantelrohr in die Innensperrstellung umzuschalten. Dadurch kann ein vorteilhafte bedingte Verriegelung zur Verfügung gestellt werden, bei der unter der Bedingung, dass sich die Mantelrohre relativ zueinander in einem bestimmten - ersten oder zweiten - Verstellzustand befinden, die Riegeleinrichtung in eine der beiden möglichen Sperrstellungen - Innen- oder Außensperrstellung - geschaltet wird. Die Sperrung oder Freigabe der Relativbewegung ist durch die Relativposition bedingt. Dadurch kann der besondere Vorteil realisiert werden, dass allein durch die Relativbewegung der Mantelrohre beim Aus- oder Einfahren eine Art mechanische Zwangs- oder Folgesteuerung gebildet wird, durch welche die Reihenfolge der relativen Bewegung jeweils eines Außen-, Zwischen- und Innenmantelrohrs eindeutig definiert ist. Auch wenn die Verstellkraft zwischen dem innersten Innenmantelrohr und dem äußersten Außenmantelrohr angreift, kann die Umschaltung, für das oder die dazwischen angeordneten Zwischenmantelrohre selbsttätig erfolgen, so dass in vorteilhafter Weise unabhängig von äußeren Einflüssen wie Reibung oder dergleichen eine definierte Reihenfolge vorgegeben und eingehalten werden kann.

Eine vorteilhafte Ausführung kann vorsehen, dass die Riegeleinrichtung ein an dem Zwischenmantelrohr beweglich gelagertes Riegelelement aufweist, welches in der Außensperrstellung in Eingriff bringbar ist mit einer am Außenmantelrohr ausgebildeten Außenriegelaufnahme und/oder in der Innensperrstellung in Eingriff bringbar ist mit einer am Innenmantelrohr ausgebildeten Innenriegelaufnahme. Das Riegelelement kann bevorzugt in radialer Richtung am Zwischenmantelrohr beweglich gelagert sein, und daran in Längsrichtung abgestützt. In einer radialen Position, die der Innensperrstellung entspricht, greift das Riegelelement - bevorzugt bezüglich der Längsrichtung formschlüssig - bevorzugt radial von außen in eine korrespondierende, bevorzugt als außen am Innenmantelrohr angeordnete radiale Ausnehmung oder Öffnung ein, welche die Innenriegelaufnahme bildet. Dadurch sind Zwischen-und Innenmantelrohr miteinander verriegelt, also in Längsrichtung miteinander verbunden. Im Außenmantelrohr ist das Zwischenmantelrohr zusammen mit dem darin durch das Riegelelement fixierten Innenmantelrohr zum Verstellen teleskopierend bewegbar. Zum Umschalten kann das Riegelelement aus dieser Position relativ zum Zwischenmantelrohr bewegt werden, bevorzugt radial nach außen, bis es die andere radiale Position einnimmt, die der Außensperrstellung entspricht. Dabei wird das Riegelelement aus der Innenriegelaufnahme entfernt, und die relative Teleskopbewegung von Zwischen- und Innenmantelrohr freigegeben. Gleichzeitig greift das Riegelelement dabei - bevorzugt bezüglich der Längsrichtung formschlüssig - radial nach außen gerichtet in eine korrespondierende, bevorzugt als am Außenmantelrohr angeordnete radiale Ausnehmung oder Öffnung ein, welche die Außenriegelaufnahme bildet. Dadurch sind Außen- und Zwischenmantelrohr miteinander verriegelt, also in Längsrichtung miteinander verbunden. Das Innenmantelrohr kann dabei teleskopierend relativ zum Zwischenmantelrohr verstellt werden.

Dadurch, dass das Riegelelement das Zwischenmantelrohr radial durchsetzt und darin radial beweglich gelagert ist, kann es zum Umschalten radial nach innen oder nach außen bewegt werden, so dass es wahlweise die Innen- oder Außensperrstellung einnimmt. Das Riegelelement kann beispielsweise als länglicher Sperrstift oder -bolzen ausgebildet sein, der beispielsweise in einer Riegelführung durch die Wandung des Zwischenmantelrohrs hindurch in radialer Richtung verschiebbar gelagert sein kann. Entsprechend ragt das Riegelelement in der Außensperrstellung nach außen vor, so dass es von innen mit der Außenriegelaufnahme des umgebenden Außenmantelrohrs zusammenwirken kann, und in der Innensperrstellung nach innen, so dass es von außen in die Innenriegelaufnahme des Innenmantelrohrs eingreifen kann. Eine derartige Anordnung ist funktionssicher, und kann vorteilhafter Weise mit geringem Aufwand und kompakten Abmessungen realisiert werden. Alternativ kann das Riegelelement auf andere Art zwischen den beiden Schaltstellungen verlagerbar sein, beispielsweise durch eine Schwenk- oder Kipplagerung oder einer Kulissenführung.

Ein als Riegelstift oder -bolzen ausgebildetes Riegelelement kann einen zumindest abschnittsweise kreisrunden Querschnitt haben. Dann kann die Riegelführung einfach als Gleitführung durch eine radiale Bohrung mit ebenfalls bevorzugt kreisrundem Querschnitt realisiert werden.

Bevorzugt können mehrere Riegelelemente über den Umfang verteilt angeordnet sein, bevorzugt symmetrisch verteilt. Dadurch kann eine gleichmäßige und sichere Kraftübertragung zwischen den miteinander verriegelten Mantelrohren realisiert werden. Außerdem kann die Verriegelungsfunktion dadurch mit geringem Aufwand redundant ausgelegt werden.

Es kann vorgesehen sein, dass das Riegelelement ausgebildet ist, um mit einem am Außenmantelrohr angeordneten (äußeren) Betätigungsmittel derart zusammenzuwirken, dass eine relative Bewegung von Zwischenmantelrohr und Außenmantelrohr umgesetzt wird in eine Bewegung des Riegelelements in die Innensperrstellung, und/oder, um mit einem am Innenmantelrohr angeordneten (inneren) Betätigungsmittel derart zusammenzuwirken, dass eine relative Bewegung von Zwischenmantelrohr und Außenmantelrohr umgesetzt wird in eine Bewegung des Riegelelements zum Umschalten in die Außensperrstellung.

Das Riegelelement bildet somit bevorzugt im Zusammenwirken mit jeweils einem Betätigungsmittel ein Umlenkgetriebe, welches jeweils eine Relativbewegung der Mantelrohre in Längsrichtung umsetzt in eine Umschaltbewegung des Riegelelements zwischen der Innen-und Außensperrstellung oder umgekehrt.

Vorzugsweise ist diese Umschaltbewegung quer zur Längsrichtung gerichtet. Konkret kann dies dadurch erreicht werden, dass jeweils beim Erreichen einer vorgegebenen relativen Verstellposition das Riegelelement mit dem Betätigungsmittel in mechanischen Kontakt kommt, und durch die auf die Mantelrohre in Längsrichtung ausgeübte Verstellkraft umgeschaltet wird. Dadurch kann eine selbsttätige Umschaltung der Riegeleinrichtung beim Ein-und Ausfahren der Manteleinheit im Sinne der oben beschriebenen bedingten Verriegelung erfolgen.

Ein Umlenkgetriebe zur Realisierung der vorgenannten Umschaltung kann mit geringem Aufwand, raumsparend und funktionssicher dadurch realisiert werden, dass das Riegelelement einen Innenkopf aufweist, der von außen in die Innenriegelaufnahme einbringbar ist, und einen Außenkopf, der von innen in die Innenriegelaufnahme einbringbar ist. Ein Innen- bzw. Außenkopf ist jeweils radial innen bzw. außen an einem beispielsweise stift- oder bolzenförmigen Riegelelement angeordnet, vorzugsweise einstückig mit diesem ausgebildet. In der jeweiligen Innen- oder Außensperrstellung dient der Innen- oder Außenriegelkopf als Sperrelement, bevorzugt als formschlüssig in die korrespondierende Innen- oder Außenriegelaufnahme eingreifendes Formschlusselement, welches im Eingriff einen in Längsrichtung wirksamen Formschluss zwischen Zwischenmantelrohr und Innen- oder Außenmantelrohr erzeugt. Dadurch bildet die Verriegelung eine zuverlässige und belastbare Verbindung.

Bei der vorgenannten Ausführung kann bevorzugt vorgesehen sein, dass der Innenkopf und/oder der Außenkopf eine Betätigungsschräge aufweisen, welche jeweils mit einem am Innenmantelrohr oder am Außenmantelrohr ausgebildeten, korrespondierenden Betätigungselement zusammenwirkt. Die jeweils am Außen- oder Innenkopf ausgebildete Betätigungsschräge ist gegen die Längsachse geneigt, bevorzugt in einem Winkel von 30° bis 60°, und bildet einen vom Riegelelement aus gesehen zum Zwischenmantelrohr hin abgeflachten Keil. Bevorzugt können Innen- und Außenkopf jeweils einen kreisrunden Querschnitt haben, wobei die Betätigungsschräge durch einen umlaufenden Kegelmantel gebildet wird. Zusammen bilden eine Betätigungsschräge und ein Betätigungselement ein als Keilgetriebe ausgebildetes Umlenkgetriebe zur Umsetzung einer Relativbewegung der Mantelrohre in Längsrichtung in eine radiale Umschaltbewegung des Riegelelements. Hierzu ist das am Außenmantelrohr angeordnete äußere Betätigungselement ausgebildet, dass es in der Außensperrstellung mit der Betätigungsschräge am Außenkopf in Kontakt kommt, wenn das Zwischenmantelrohr in das Außenmantelrohr eingefahren wird und eine vorgegebene Verstellposition erreicht, die weiter oben als zweite Relativposition bezeichnet ist. Beim weiteren Einfahren gleitet das radial feststehende Betätigungselement über die Betätigungsschräge, wobei das Riegelelement durch die Keilwirkung radial nach innen bewegt wird, und aus der Außensperrstellung in die Innensperrstellung umgeschaltet wird. Aus der Innensperrstellung kann das Riegelelement durch ein gleichartiges, mit einer Betätigungsschräge am Innenkopf zusammenwirkendes inneres Betätigungselement am Innenmantelrohr in die Außensperrstellung bewegt werden.

Alternativ kann es vorgesehen sein, dass das Riegelelement an seinen freien Enden eine Rolle aufweist, die drehbar an dem Riegelelement gelagert ist und mit der jeweiligen Riegelaufnahme in Eingriff bringbar ist. Dadurch kann eine wirkende Reibkraft bei dem Umschaltvorgang reduziert werden.

Das Riegelelement kann bevorzugt aus einem Kunststoff oder einem metallischen Werkstoff wie Stahl, Aluminium, Zamak, Messing oder Bronze. In einer vorteilhaften Weiterbildung kann das Riegelelement mit einem Gleitlack zumindest teilweise beschichtet sein.

Um bei einer Relativbewegung zweier Mantelrohre eine sichere, definierte und von der Reibung unabhängige Übertragung der Verstellkraft auf das vorangehend beschriebene Umlenkgetriebe aus Betätigungselement und -schräge, oder auch eine andere mögliche Form eines Umlenk- oder Betätigungsgetriebes, zu gewährleisten, ist es vorteilhaft, dass das Innenmantelrohr und/ oder das Außenmantelrohr und das Zwischenmantelrohr korrespondierende, in Längsrichtung gegeneinander in Anschlag bringbare Längsanschläge aufweisen. Beispielsweise kann das Zwischenmantelrohr als Längsanschlag an dem einen Ende, aus dem das Innenmantelrohr ausgefahren werden kann, eine axiale Anschlagfläche aufweisen. Das Innenmantelrohr weist einen Längsanschlag mit einer gegenüberliegenden axialen Anschlagfläche auf. Beim Einfahren des Innenmantelrohrs schlägt diese gegen die genannte Anschlagfläche des Zwischenmantelrohrs an, welches dann durch die am Innenmantelrohr ansetzende Verstellkraft in Längsrichtung mitgenommen wird. Dadurch wird das Zwischenmantelrohr zusammen mit dem darin eingefahrenen Innenmantelrohr in das Außenmantelrohr eingefahren, bis - wie vorangehend beschrieben - die Betätigungsschräge des Außenkopfes das Betätigungselement des Außenmantelrohr kontaktiert. In dieser Verstellposition wird das Riegelelement in die Innensperrstellung umgeschaltet und greift in die Innenriegelaufnahme des Innenmantelrohrs ein.

Es ist möglich, dass eine Betätigungsschräge und ein korrespondierendes Betätigungselement vorgesehen sind, um das Riegelelement nur in eine Betätigungsrichtung - aus der Außensperrstellung in die Innensperrstellung oder umgekehrt - zu bewegen. Um das Riegelelement umgekehrt zur Betätigungsrichtung zu bewegen - also aus der Innensperrposition wieder in die Außensperrposition oder umgekehrt - kann es vorteilhaft sein, dass das Riegelelement in der Außensperrstellung oder der Innensperrstellung federbelastet ist.

Die Federbelastung kann durch ein elastisch verformbares Federelement bereitgestellt werden, welches beispielsweise eine Spiralfeder, eine Tellerfeder oder ein Gummielement aufweisen kann.

Dadurch, dass das Riegelelement beispielsweise in der Außensperrstellung elastisch vorgespannt ist, bevorzugt mittels eines am Zwischenmantelrohr abgestützten Federelements, erfolgt die vorangehend beschriebene Bewegung durch das Betätigungselement gegen die Vorspannung, d.h. gegen die elastische Federkraft. Solange das Zwischenmantelrohr sich mit der Riegeleinrichtung in der eingefahrenen Verstauposition innerhalb des Außenmantelrohrs befindet, stützt sich das Riegelelement mit der Vorspannung nach außen gegen die Innenwandung des Außenmantelrohrs ab, so dass es durch die Federkraft nicht aus der Innensperrstellung herausbewegt werden kann. Sobald jedoch beim teleskopierenden Ausfahren des Zwischenmantelrohrs das Riegelelement die Öffnung des Außenmantelrohrs passiert, wird es selbsttätig durch die Federkraft aus der Innensperrposition in die Außensperrposition bewegt. Dadurch ist das Innenmantelrohr entriegelt und kann aus dem Zwischenmantelrohr ausgefahren werden. Das Federelement bildet dabei ebenfalls ein Betätigungsmittel, welches eine selbsttätige Umschaltung der Riegeleinrichtung beim Ein- und Ausfahren der Manteleinheit bewirken kann, wenn eine vorbestimmte Verstellposition erreicht wird.

Die Mantelrohre können weiterhin an sich bekannte Auszugsicherungen aufweisen, die verhindern, dass ein inneres Mantelrohr aus einem äußeren Mantelrohr, in dem es aufgenommen und geführt ist, vollständig herausgezogen werden kann, wobei die Manteleinheit getrennt würde. Die bekannten Auszugsicherungen weisen an einem inneren Mantelrohr an seinem eintauchenden Ende nach außen vorspringende axiale Anschläge auf, und axial, in Längsrichtung gegen dieses in Anschlag bringbare, am äußeren Mantelrohr nach innen vorspringende Gegenanschläge auf.

Bevorzugt kann eine Kombination von Betätigungsmitteln vorgesehen sein, welche mindestens ein mit einem Riegelelement in der vorangehend beschriebenen Weise zusammenwirkendes Umlenkgetriebe aufweist, und mindestens ein Federelement, welches ebenfalls mit dem Riegelelement zusammenwirkt.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: eine vergrößerte Detailansicht von Figur 1 im Bereich der Riegeleinrichtung,
- Figur 3: einen Längsschnitt entlang der Längsachse durch die Lenksäule gemäß Figur 1 in Verstauposition (= eingefahrener / zusammen gefahrener Zustand),
- Figur 4: eine vergrößerte Detailansicht von Figur 3 im Bereich der Riegeleinrichtung,
- Figur 5: einen Längsschnitt entlang der Längsachse durch die Lenksäule gemäß Figur 1 in Bedienposition (= ausgefahrener / auseinander gefahrener Zustand),
- Figur 6: eine vergrößerte Detailansicht von Figur 5 im Bereich der Riegeleinrichtung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

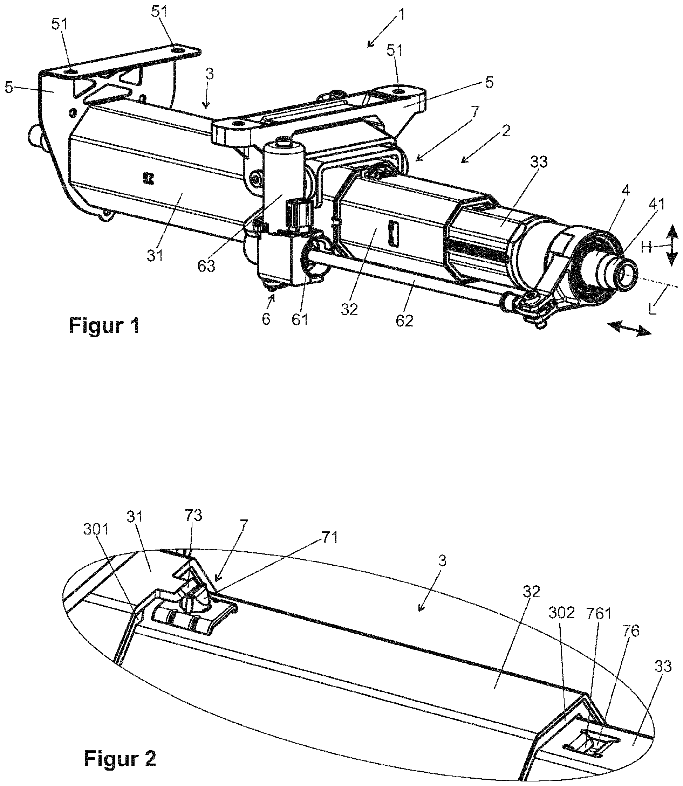

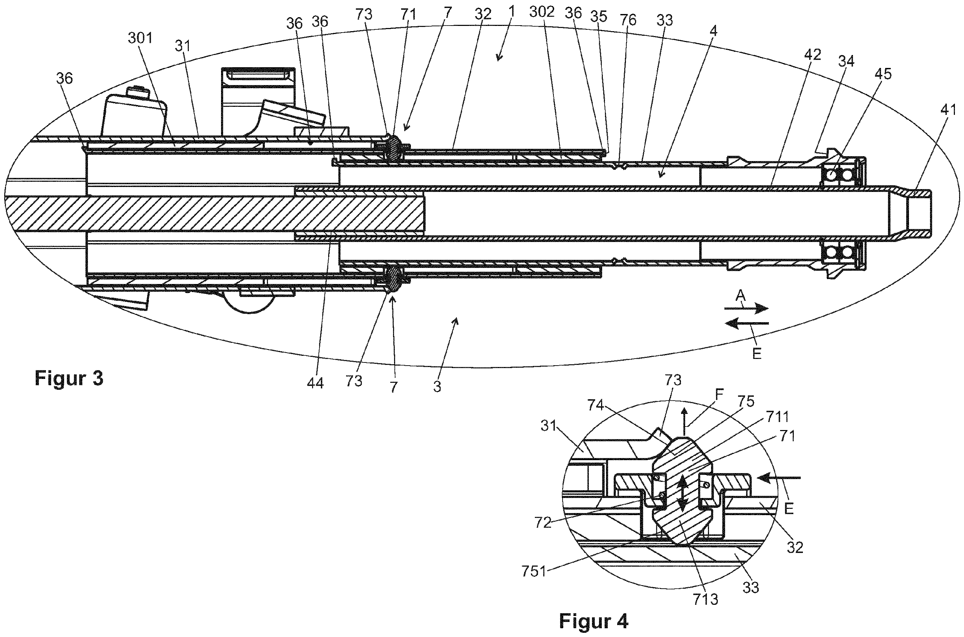

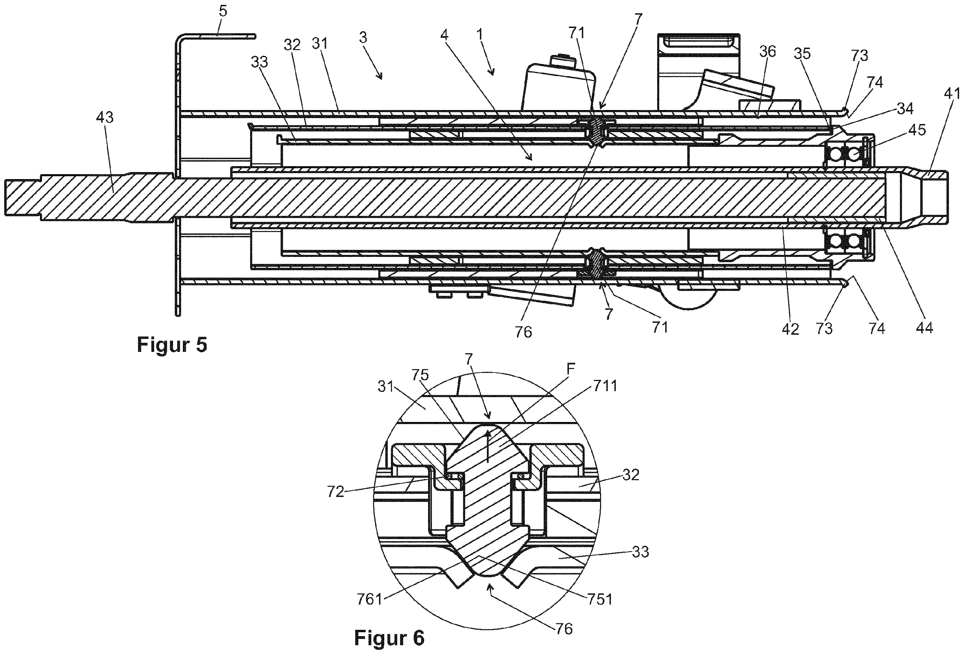

Figur 1 zeigt eine erfindungsgemäße Lenksäule 1 in einer perspektivischen Ansicht bezüglich der Fahrtrichtung von schräg hinten, in Figur 3 in einem Längsschnitt in Verstauposition in maximal eingefahrenem bzw. zusammen gefahrenem Zustand, und in Figur 5 in derselben Schnittansicht wie in Figur 3 in einer möglichen Bedien- bzw. Betriebsposition in einem ausgefahrenen Zustand. Figuren 2, 4 und 6 zeigen vergrößerte Teilansichten der Figuren 1, 3 und 5.

Die Lenksäule 1 weist eine Stelleinheit 2 auf. Die Stelleinheit 2 umfasst eine Manteleinheit 3 mit drei Mantelrohren 31, 32, 33, nämlich einem Außenmantelrohr 31, einem Zwischenmantelrohr 32 und einem Innenmantelrohr 33. Die Mantelrohre 31, 32 und 33 sind koaxial ineinander angeordnet und in Längsrichtung, dies entspricht der Achsrichtung einer Längsachse L, teleskopierend verschiebbar, wie mit dem Doppelpfeil angedeutet. Dabei ist die eine Richtung, in der die Mantelrohre 31, 32, 33 zur Verkürzung der Stelleinheit 2 in die Verstauposition ineinander zusammen bewegt werden, d.h. eingefahren werden, die Einfahrrichtung E, und entsprechend die dieser entgegengesetzte Richtung, in der die Mantelrohre 31, 32, 33 aus der Verstauposition in Richtung einer Bedienposition auseinander bewegt werden, d.h. ausgefahren werden, die Ausfahrrichtung A, wie mit den jeweiligen Pfeilen angedeutet.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist. Die Lenkspindel 4 ist ebenfalls in Achsrichtung teleskopierbar ausgebildet, mit einer als Hohlwelle ausgebildeten Außenwelle 42, in die eine Innenwelle 43 in Achsrichtung teleskopierend verschiebbar eintaucht. Die Innenwelle 43 und die Außenwelle 42 sind drehmomentschlüssig über eine längsverschiebliche Kupplung 44 miteinander verbunden, die in an sich bekannter Weise über unrunde Querschnitte, Längsverzahnungen oder dergleichen eine drehschlüssige, in Achsrichtung verschiebbare Verbindung erzeugt. Die Außenwelle 42 ist in dem Innenmantelrohr 33 in einem Lager 45 gelagert, welches bevorzugt Wälzlager aufweist. Die Innenwelle 43 kann in dem Außenmantelrohr drehbar gelagert sein. Die Innenwelle 43 kann bevorzugt mit einer Welle eines Feedback-Aktuators verbindbar sein. Alternativ kann die Innenwelle 43 auch mit einer Lenkzwischenwelle koppelbar sein, die wiederum mit einer Eingangswelle eines Lenkgetriebes drehmomentenschlüssig gekoppelt ist, wobei die Lenkzwischenwelle bevorzugt zumindest ein Universalgelenk umfasst.

Die Manteleinheit 3 ist in einer zweiteiligen Trageinheit 5 gehalten, welche Befestigungsmittel 51 zur Anbringung an einer nicht dargestellten Fahrzeugkarosserie aufweist.

Ein Verstellantrieb 6 weist einen Spindeltrieb mit einer Spindelmutter 61 und einer darin eingeschraubten Gewindespindel 62 auf, die von einem elektrischen Motor 63 relativ zueinander drehend antreibbar sind. Die Gewindespindel 62 erstreckt sich parallel zur Längsachse L und ist mit dem Innenmantelrohr 33 verbunden, und die Spindelmutter 61 stützt sich über den Verstellantrieb 6 in Längsrichtung, die der Achsrichtung der Längsachse L entspricht, an dem Außenmantelrohr 31 ab. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Achsrichtung entweder in Einfahrrichtung E in das Außenmantelrohr 31 eingefahren oder entgegengesetzt in Ausfahrrichtung A aus dem Außenmantelrohr 31 ausgefahren werden kann. Dadurch wird eine Längsverstellung realisiert, durch die ein an dem Anschlussabschnitt 41 angebrachtes Lenkrad wahlweise nach vorn in die in Figur 5 gargestellte Verstauposition, in der das Innenmantelrohr 33 und das Zwischenmantelrohr 32 in dem Außenmantelrohr 31 eingefahren, d.h. nach vorn versenkt sind, oder nach hinten in eine in Figur 1 oder Figur 3 dargestellte Bedienposition gebracht werden kann, in der die Mantelrohre 31, 32 und 33 auseinander ausgefahren sind. Zwischen dem Außenmantelrohr 31 und dem Zwischenmantelrohr 32 kann optional eine erste Gleithülse 301 angeordnet und zwischen dem Zwischenmantelrohr 32 und dem Innenmantelrohr 33 kann eine optionale zweite Gleithülse 302 angeordnet sein. Die Gleithülsen 301, 302 können Ausnehmungen oder Nuten aufweisen, durch die sich der Riegelstift 71 der Riegeleinrichtung 7 hindurch erstreckt. Bevorzugt sind die Gleithülsen 301, 302 aus einem Kunststoff gebildet.

Alternativ kann sich die Spindelmutter 61 an dem Innenmantelrohr 33, und die Gewindespindel 62 an dem Außenmantelrohr 31 abstützen.

In Figur 3 ist eine Bedienposition der Lenksäule 1 gezeigt, bei der das Zwischenmantelrohr 32 und das Innenmantelrohr 33 in Ausfahrrichtung A - in der Zeichnung nach rechts - zumindest teilweise aus dem Außenmantelrohr 31 herausgefahren sind, so dass sich ein an dem Anschlussabschnitt 41 anbringbares Lenkrad im Bedienbereich zur Eingabe von Lenkbefehlen befindet. Figur 5 zeigt in derselben Schnittansicht die Verstauposition, bei der das Zwischenmantelrohr 32 und das Innenmantelrohr 33 in Einfahrrichtung E maximal in das Außenmantelrohr 31 hinein eingeschoben sind. Dadurch ist die Lenksäule 1 maximal in Achsrichtung verkürzt, so dass das Lenkrad - beispielsweise im autonomen Fahrbetrieb oder bei einem parkierten Fahrzeug zum erleichterten Ein- und Aussteigen - außerhalb des Bedienbereichs verstaut sein kann.

Eine erfindungsgemäße Riegeleinrichtung 7 umfasst ein als Riegelstift 71 ausgebildetes Riegelelement, welches in dem Zwischenmantelrohr 32 quer zur Längsachse L, d.h. in radialer Richtung bewegbar, in Achsrichtung der Längsachse L abgestützt gelagert ist. Der Riegelstift 71 durchsetzt die Wandung des Zwischenmantelrohrs 32 in einer Führungsöffnung gleitend, und weist einen nach außen vorstehenden Außenkopf 711 und einen nach innen vorstehenden Innenkopf 713 auf, der eine geneigte Steuerfläche 751 aufweist. Durch ein Federelement 72, beispielsweise eine Schraubenfeder, welches sich von außen gegen das Zwischenmantelrohr 32 abstützt und an dem Riegelstift 71 angreift, ist der Riegelstift 71 bezüglich der Längsachse L mit einer Federkraft F radial nach außen elastisch vorgespannt, wie in Figuren 4 und 6 angegeben.

In einer Außensperrstellung, wie in Figuren 2, 3 und 4 dargestellt, ist der Riegelstift 71 bezüglich des Zwischenmantelrohrs 32 radial nach außen verschoben. Dabei steht der Außenkopf 711 so weit nach außen vor, dass er mit einer an dem Außenmantelrohr 31 ausgebildete Außenriegelaufnahme 73 zusammenwirkt. Die Außenriegelaufnahme 73 weist eine geneigte Axialfläche 74 auf, welche ein Betätigungsmittel im Sinne der Erfindung darstellt. Der Außenkopf 711 weist eine Betätigungsschräge 75 auf, die im gezeigten Beispiel in einem Winkel von etwa 45° in Einfahrrichtung E gegen die Längsachse L abfallend geneigt ist.

In der Außensperrstellung ist das Zwischenmantelrohr 32 mit dem Außenmantelrohr 31 derart mit der Außenriegelaufnahme 73 verriegelt, dass es nicht in Einfahrrichtung E in das Außenmantelrohr 31 eingefahren werden kann, wobei ein weiteres Ausfahren in Ausfahrrichtung A des Zwischenmantelrohrs 32 aus dem Außenmantelrohr 31 möglich ist. Dabei kann das Innenmantelrohr 33 in dem Zwischenmantelrohr 32 ungehindert teleskopierend bewegt werden.

Das Innenmantelrohr 33 weist eine Innenriegelaufnahme 76 in Form einer keilförmigen Öffnung auf, in die der Riegelstift 71 in der in Figur 6 dargestellten Innensperrstellung, in der er bezüglich des Zwischenmantelrohrs 32 radial nach innen verlagert ist, mit seinem Innenkopf 713 eingreift. Dadurch wird eine in Achsrichtung wirksame formschlüssige Verbindung erzeugt, durch welche das Innenmantelrohr 33 mit dem Zwischenmantelrohr 32 in Achsrichtung (Längsrichtung) verriegelt ist.

In der Innensperrstellung ist das Zwischenmantelrohr 32 mit dem Innenmantelrohr 33 derart mit der Innenriegelaufnahme 73 verriegelt, dass es nicht in Einfahrrichtung E und auch nicht in Ausfahrrichtung A relativ zueinander bewegt werden kann. Dabei kann das Zwischenmantelrohr 32 zusammen mit diesem verriegelten Innenmantelrohr 33 in dem Außenmantelrohr 31 ungehindert teleskopierend bewegt werden.

Dadurch, dass der Riegelstift 71 in die Außen- oder Innensperrstellung bewegt werden kann, kann eine erfindungsgemäße Umschaltung der Riegeleinrichtung 7 bewirkt werden, die für eine definierte Reihenfolge beim teleskopierenden Ein- oder Ausfahren der Mantelrohre 31, 32, 33 sorgt, wie nachfolgend erläutert wird.

In die Lenksäule 1 aus der in Figur 3 dargestellten, ausgefahrenen Bedienposition - beispielsweise beim autonomen Fahren - in die in Figur 5 gezeigte Verstauposition zu bringen, wird durch den Verstellantrieb 6 eine Verstellkraft in Einfahrrichtung E auf das Innenmantelrohr 33 ausgeübt. Dabei verhindert die in der Außensperrstellung befindliche Riegeleinrichtung 7 durch den formschlüssig gegen die Außenriegelaufnahme 73 anliegenden Außenkopf 711 des Riegelstifts 71, dass das Zwischenmantelrohr 32 in das Außenmantelrohr 31 einfahren kann. Der Riegelstift 71 stützt sich dabei mit seinem Innenkopf 713 von außen gegen das Innenmantelrohr 33 derart ab, dass er die Außensperrstellung nicht verlassen kann. Zunächst kann daher nur das Innenmantelrohr 33 in das Zwischenmantelrohr 32 eingefahren werden.

Wenn das Innenmantelrohr 33 vollständig in das Zwischenmantelrohr eingefahren ist, befinden sich der Riegelstift 71 und die Innenriegelaufnahme 76 an derselben Position. Dadurch, dass ein am Innenmantelrohr 33 angeordneter Längsanschlag 34, der eine in Einfahrrichtung E gegen das Zwischenmantelrohr 32 gerichtete axiale Anschlagfläche hat, gegen eine axial gegenüberliegende Anschlagfläche eines korrespondierenden Längsanschlags 35 am Zwischenmantelrohr 32 anschlägt, wirkt die Verstellkraft des Verstellantriebs 6 zwischen der Betätigungsschräge 75 des Außenkopfes 711 und der dagegen anliegenden Axialfläche 74 der Außenriegelaufnahme 73. Das Umschalten der Riegeleinrichtung 7 wird dadurch bewirkt, dass die Betätigungsschräge 75 und die Axialfläche 74 ein Kurvengetriebe bilden. Durch dieses Kurvengetriebe wird die in Achsrichtung wirkende Verstellkraft umgelenkt und derart in radialer Richtung auf den Riegelstift 71 übertragen, so dass dieser aus der Außensperrstellung gegen die Federkraft F radial nach innen bewegt wird, bis er in die in Figur 6 dargestellte Innensperrstellung einnimmt. Dabei taucht der nach innen bewegte Innenkopf 713 formschlüssig in die Innenriegelaufnahme 76 ein.

Durch das beschriebene selbsttätige Umschalten wird nunmehr das Innenmantelrohr 33 mit dem Zwischenmantelrohr 32 verriegelt, und gleichzeitig wird die Verriegelung des Zwischenmantelrohrs 32 mit dem Außenmantelrohr 31 gelöst. Folglich wird durch die weiter in Einfahrrichtung E ausgeübte Verstellkraft das Zwischenmantelrohr 32 zusammen mit dem darin befindlichen Innenmantelrohr 33 in das Außenmantelrohr 31 eingefahren, bis die in Figur 5 dargestellte Endposition, also die Verstauposition erreicht ist.

Die Reihenfolge, in der die Mantelrohre 31, 32, 33 relativ zueinander bewegt werden, ist durch die bedingte Verriegelung eindeutig festgelegt, so dass undefinierte Verstellzustände sicher vermieden werden können.

Um die Lenksäule 1 aus der Verstauposition in die Bedienposition zu bringen, wird von dem Verstellantrieb 6 in Figur 5 eine Verstellkraft in Ausfahrrichtung A auf das Innenmantelrohr 33 ausgeübt. Dann kann zunächst nur das mit dem Innenmantelrohr 33 verriegelte Zwischenmantelrohr 32 aus dem Außenmantelrohr 31 herausbewegt werden. Wenn der Riegelstift 71 die in Figur 3 gezeigte Position erreicht, wird er durch die Federkraft F des Federelements 72 selbsttätig aus der Innensperrstellung in die Außensperrstellung gemäß Figur 4 bewegt, so dass die Riegeleinrichtung 7 umgeschaltet wird. Erst dann kann das Innenmantelrohr 33 aus dem Zwischenmantelrohr 32 ausgefahren werden. Alternativ kann das Federelement 72 auch weggelassen werden. Durch eine geneigte Steuerfläche 761 der Innenriegelaufnahme 76 wird der Riegelstift 71, der mit der am Innenkopf 713 ausgebildeten Gegensteuerfläche 751 mit der Steuerfläche zusammenwirkt und ein Kurvengetriebe bereitstellt, aus der Innensperrstellung in die Außensperrstellung überführt, wenn die Bewegung des Riegelstifts 71 durch den Außenmantel 31 nicht mehr verhindert ist und dieser in die Außenriegelaufnahmen eingreifen kann. Mit anderen Worten wird durch die geneigte Steuerfläche und Gegensteuerfläche die in Richtung der Längsachse wirkende Kraft in eine Hubbewegung des Riegelstifts 71 umgewandelt.

Bevorzugt sind wie dargestellt zwei oder mehr Riegeleinrichtungen 7 über den Umfang verteilt angeordnet.

Bevorzugt weisen die Mantelrohre 31, 32, 33 Auszugsicherungen 36 auf, welche an außen an einem inneren Mantelrohr 32, 33 radial vorstehende Axialanschläge umfassen, die mit an den korrespondierenden äußeren Mantelrohren 31, 32 radial nach innen vorstehenden Axialanschlägen derart zusammenwirken, dass sie bei einem vorgegebenen Auszug gegeneinander anschlagen und ein zu weites Ausfahren oder Trennen der Mantelrohre 31, 32, 33 verhindern, wobei sich die Auszugssicherungen an den Gleithülsen 301, 302 in einer Anschlagsituation abstützen.

### Bezugszeichenliste

- 1: Lenksäule
- 2: Stelleinheit
- 3: Manteleinheit
- 31: Außenmantelrohr
- 311: Laufbahn
- 32: Zwischenmantelrohr
- 321: Laufbahn
- 33: Innenmantelrohr
- 34, 35: Längsanschlag
- 36: Auszugsicherungen
- 4: Lenkspindel
- 41: Anschlussabschnitt
- 42: Außenwelle
- 43: Innenwelle
- 44: Kupplung
- 45: Lager
- 5: Trageinheit
- 51: Befestigungsmittel
- 6: Verstellantrieb
- 61: Spindelmutter
- 62: Gewindespindel
- 63: Motor
- 7: Riegeleinrichtung
- 71: Riegelstift
- 711: Außenkopf
- 713: Innenkopf
- 72: Federelement
- 73: Außenriegelaufnahme
- 74: Axialfläche (Betätigungsmittel)
- 75: Betätigungsschräge
- 76: Innenriegelaufnahme

- L: Längsachse
- E: Einfahrrichtung
- A: Ausfahrrichtung
- F: Federkraft

## Patentansprüche

1. Lenksäule (1) für ein Kraftfahrzeug, umfassend eine Manteleinheit (3), in der eine Lenkspindel (4) um eine Längsachse (L) drehbar gelagert ist und die mindestens drei in Achsrichtung relativ zueinander verstellbare, teleskopartig geführte Mantelrohre (31, 32, 33) aufweist, von denen eines ein Außenmantelrohr (31) bildet, in dem mindestens ein Zwischenmantelrohr (32) aufgenommen ist, in dem ein Innenmantelrohr (33) aufgenommen ist, und umfassend eine Riegeleinrichtung (7), die eingerichtet ist um mindestens zwei der Mantelrohre (31, 32, 33) in Richtung der Längsachse (L) lösbar miteinander zu verriegeln,
**dadurch gekennzeichnet,**
**dass** die Riegeleinrichtung (7) umschaltbar ist zwischen einer Innensperrstellung und einer Außensperrstellung, wobei in der Innensperrstellung das Zwischenmantelrohr (32) mit dem Innenmantelrohr (33) verriegelt ist, und in der Außensperrstellung das Zwischenmantelrohr (32) mit dem Außenmantelrohr (31) verriegelt ist.

2. Lenksäule (1) nach Anspruch 1, **dadurch gekennzeichnet, dass** das Innenmantelrohr (33) ein Betätigungsmittel aufweist, welches eingerichtet ist, die Riegeleinrichtung (7) in die Außensperrstellung umzuschalten, und/oder das Außenmantelrohr (31) ein Betätigungsmittel (74) aufweist, welches eingerichtet ist, die Riegeleinrichtung (7) in die Innensperrstellung umzuschalten.

3. Lenksäule (1) nach Anspruch 2, **dadurch gekennzeichnet, dass** ein Betätigungsmittel des Innenmantelrohrs (33) eingerichtet ist, die Riegeleinrichtung (7) in Abhängigkeit von einer vorgegebenen ersten Relativposition von Zwischenmantelrohr (32) und Außenmantelrohr (31) in die Außensperrstellung umzuschalten, und/oder ein Betätigungsmittel (74) des Außenmantelrohrs (31) eingerichtet ist, die Riegeleinrichtung (7) in Abhängigkeit von einer vorgegebenen zweiten Relativposition von Zwischenmantelrohr (32) und Außenmantelrohr (31) in die Innensperrstellung umzuschalten.

4. Lenksäule (1) nach einem der vorangehenden Ansprüche, **dadurch gekennzeichnet, dass** die Riegeleinrichtung (7) ein an dem Zwischenmantelrohr (32) beweglich gelagertes Riegelelement (71) aufweist, welches in der Außensperrstellung in Eingriff bringbar ist mit einer am Außenmantelrohr (31) ausgebildeten Außenriegelaufnahme (73) und/oder in der Innensperrstellung in Eingriff bringbar ist mit einer am Innenmantelrohr ausgebildeten Innenriegelaufnahme (76).

5. Lenksäule (1) nach Anspruch 4, **dadurch gekennzeichnet, dass** das Riegelelement (71) das Zwischenmantelrohr (32) radial durchsetzt und darin radial beweglich gelagert ist.

6. Lenksäule (1) nach einem der Ansprüche 4 bis 5, **dadurch gekennzeichnet, dass** das Riegelelement (71) ausgebildet ist, um mit einem am Außenmantelrohr (31) angeordneten Betätigungsmittel (74) derart zusammenzuwirken, dass eine relative Bewegung von Zwischenmantelrohr (32) und Außenmantelrohr (31) umgesetzt wird in eine Bewegung des Riegelelements (71) in die Innensperrstellung, und/oder, um mit einem am Innenmantelrohr (33) angeordneten Betätigungsmittel (72) derart zusammenzuwirken, dass eine relative Bewegung von Zwischenmantelrohr (32) und Außenmantelrohr (31) umgesetzt wird in eine Bewegung des Riegelelements (71) zum Umschalten in die Außensperrstellung.

7. Lenksäule (1) nach einem der Ansprüche 4 bis 6, **dadurch gekennzeichnet, dass** das Riegelelement (71) einen Innenkopf (713) aufweist, der von außen in die Innenriegelaufnahme (76) einbringbar ist, und einen Außenkopf (711), der von innen in die Außenriegelaufnahme (74) einbringbar ist.

8. Lenksäule (1) nach Anspruch 7, **dadurch gekennzeichnet, dass** der Innenkopf (713) und/oder der Außenkopf (711) eine Betätigungsschräge (75) aufweisen, welche jeweils mit einem am Innenmantelrohr (33) oder am Außenmantelrohr (31) ausgebildeten, korrespondierenden Betätigungselement (74) zusammenwirkt.

9. Lenksäule (1) nach einem der Ansprüche 4 bis 8, **dadurch gekennzeichnet, dass** das Innenmantelrohr (33) und/ oder das Außenmantelrohr (31) und das Zwischenmantelrohr (32) korrespondierende, in Richtung der Längsachse gegeneinander in Anschlag bringbare Längsanschläge (34, 35, 36) aufweisen.

10. Lenksäule (1) nach einem der Ansprüche 4 bis 9, **dadurch gekennzeichnet, dass** das Riegelelement (71) in der Außensperrstellung oder der Innensperrstellung federbelastet ist.

## Claims

1. A steering column (1) for a motor vehicle, comprising a casing unit (3) in which a steering spindle (4) is mounted so as to be rotatable about a longitudinal axis (L) and which has at least three telescopically guided casing tubes (31, 32, 33) which are mutually adjustable in the axial direction, of which one forms an external casing tube (31) in which at least one intermediate casing tube (32) is received, an internal casing tube (33) being received in the latter, and comprising a locking bolt installation (7) which is specified for releasably locking at least two of the casing tubes (31, 32, 33) to one another in the direction of the longitudinal axis (L),
**characterized in that**
the locking bolt installation (7) is able to be switched between an internal blocking position and an external blocking position, wherein the intermediate casing tube (32) in the internal blocking position is locked to the internal casing tube (33), and the intermediate casing tube (32) in the external blocking position is locked to the external casing tube (31).

2. The steering column (1) as claimed in claim 1, **characterized in that** the internal casing tube (33) has an activation means which is specified for switching the locking bolt installation (7) to the external blocking position, and/or the external casing tube (31) has an activation means (74) which is specified for switching the locking bolt installation (7) to the internal blocking position.

3. The steering column (1) as claimed in claim 2, **characterized in that** an activation means of the internal casing tube (33), as a function of a predefined first relative position of the intermediate casing tube (32) and the external casing tube (31), is specified for switching the locking bolt installation (7) to the external blocking position, and/or an activation means (74) of the external casing tube (31), as a function of a predefined second relative position of the intermediate casing tube (32) and the external casing tube (31), is specified for switching the locking bolt installation (7) to the internal blocking position.

4. The steering column (1) as claimed in one of the preceding claims, **characterized in that** the locking bolt installation (7) has a locking element (71) which is mounted so as to be movable on the intermediate casing tube (32) and which in the external blocking position is able to be brought to engage with an external locking bolt receptacle (73) configured on the external casing tube (31), and/or in the internal blocking position is able to be brought to engage with an internal locking bolt receptacle (76) configured on the internal casing tube.

5. The steering column (1) as claimed in claim 4, **characterized in that** the locking element (71) radially penetrates the intermediate casing tube (32) and is mounted in the latter so as to be radially movable.

6. The steering column (1) as claimed in one of claims 4 to 5, **characterized in that** the locking element (71) is configured for interacting with an activation means (74) disposed on the external casing tube (31) in such a manner that a relative movement between the intermediate casing tube (32) and the external casing tube (31) is converted to a movement of the locking element (71) to the internal blocking position, and/or for interacting with an activation means (72) disposed on the internal casing tube (33) in such a manner that a relative movement between the intermediate casing tube (32) and the external casing tube (31) is converted to a movement of the locking element (71) for switching to the external blocking position.

7. The steering column (1) as claimed in one of claims 4 to 6, **characterized in that** the locking element (71) has an internal head (713) which is able to be introduced from the outside into the internal locking bolt receptacle (76), and an external head (711) which is able to be introduced from the inside into the external locking bolt receptacle (74).

8. The steering column (1) as claimed in claim 7, **characterized in that** the internal head (713) and/or the external head (711) have/has an activation ramp (75) which interacts in each case with a corresponding activation element (74) configured on the internal casing tube (33) or on the external casing tube (31).

9. The steering column (1) as claimed in one of claims 4 to 8, **characterized in that** the internal casing tube (33) and/or the external casing tube (31) and the intermediate casing tube (32) have corresponding longitudinal detents (34, 35, 36) which can be brought to impact one another in the direction of the longitudinal axis.

10. The steering column (1) as claimed in one of claims 4 to 9, **characterized in that** the locking element (71) is spring-loaded in the external blocking position or the internal blocking position.

## Revendications

1. Colonne de direction (1) pour un véhicule automobile, comprenant une unité d'enveloppe (3), dans laquelle une broche de direction (4) est montée de manière rotative autour d'un axe longitudinal (L) et qui comprend au moins trois tubes d'enveloppe (31, 32, 33) guidés de manière télescopique, déplaçables les uns par rapport aux autres dans la direction axiale, parmi lesquels un forme un tube d'enveloppe extérieur (31), dans lequel au moins un tube d'enveloppe intermédiaire (32) est reçu, dans lequel un tube d'enveloppe intérieur (33) est reçu, et comprenant un dispositif de verrouillage (7), qui est conçu pour verrouiller au moins deux des tubes d'enveloppe (31, 32, 33) de manière détachable les uns avec les autres dans la direction de l'axe longitudinal (L),
**caractérisée en ce que**
le dispositif de verrouillage (7) est commutable entre une position de blocage intérieur et une position de blocage extérieur ; dans la position de blocage intérieur, le tube d'enveloppe intermédiaire (32) étant verrouillé avec le tube d'enveloppe intérieur (33), et dans la position de blocage extérieur, le tube d'enveloppe intermédiaire (32) étant verrouillé avec le tube d'enveloppe extérieur (31).

2. Colonne de direction (1) selon la revendication 1, **caractérisée en ce que** le tube d'enveloppe intérieur (33) comprend un moyen d'actionnement qui est conçu pour commuter le dispositif de verrouillage (7) dans la position de blocage extérieur, et/ou le tube d'enveloppe extérieur (31) comprend un moyen d'actionnement (74) qui est conçu pour commuter le dispositif de verrouillage (7) dans la position de blocage intérieur.

3. Colonne de direction (1) selon la revendication 2, **caractérisée en ce qu'**un moyen d'actionnement du tube d'enveloppe intérieur (33) est conçu pour commuter le dispositif de verrouillage (7), en fonction d'une première position relative prédéterminée du tube d'enveloppe intermédiaire (32) et du tube d'enveloppe extérieur (31), dans la position de blocage extérieur, et/ou un moyen d'actionnement (74) du tube d'enveloppe extérieur (31) est conçu pour commuter le dispositif de verrouillage (7), en fonction d'une deuxième position relative prédéterminée du tube d'enveloppe intermédiaire (32) et du tube d'enveloppe extérieur (31), dans la position de blocage intérieur.

4. Colonne de direction (1) selon l'une quelconque des revendications précédentes, **caractérisée en ce que** le dispositif de verrouillage (7) comprend un élément de verrouillage (71) monté de manière mobile sur le tube d'enveloppe intermédiaire (32) qui, dans la position de blocage extérieur, peut être mis en prise avec un logement de verrouillage extérieur (73) formé sur le tube d'enveloppe extérieur (31) et/ou, dans la position de blocage intérieur, peut être mis en prise avec un logement de verrouillage intérieur (76) formé sur le tube d'enveloppe intérieur.

5. Colonne de direction (1) selon la revendication 4, **caractérisée en ce que** l'élément de verrouillage (71) traverse radialement le tube d'enveloppe intermédiaire (32) et est monté de manière mobile radialement dans celui-ci.

6. Colonne de direction (1) selon l'une quelconque des revendications 4 à 5, **caractérisée en ce que** l'élément de verrouillage (71) est configuré pour coopérer avec un moyen d'actionnement (74) agencé sur le tube d'enveloppe extérieur (31), de telle sorte qu'un mouvement relatif du tube d'enveloppe intermédiaire (32) et du tube d'enveloppe extérieur (31) est transformé en un mouvement de l'élément de verrouillage (71) dans la position de blocage intérieur, et/ou pour coopérer avec un moyen d'actionnement (72) agencé sur le tube d'enveloppe intérieur (33), de telle sorte qu'un mouvement relatif du tube d'enveloppe intermédiaire (32) et du tube d'enveloppe extérieur (31) est transformé en un mouvement de l'élément de verrouillage (71) pour la commutation dans la position de blocage extérieur.

7. Colonne de direction (1) selon l'une quelconque des revendications 4 à 6, **caractérisée en ce que** l'élément de verrouillage (71) comprend une tête intérieure (713), qui peut être introduite depuis l'extérieur dans le logement de verrouillage intérieur (76), et une tête extérieure (711), qui peut être introduite depuis l'intérieur dans le logement de verrouillage extérieur (74).

8. Colonne de direction (1) selon la revendication 7, **caractérisée en ce que** la tête intérieure (713) et/ou la tête extérieure (711) comprennent un biais d'actionnement (75), qui coopère à chaque fois avec un élément d'actionnement correspondant (74) formé sur le tube d'enveloppe intérieur (33) ou sur le tube d'enveloppe extérieur (31).

9. Colonne de direction (1) selon l'une quelconque des revendications 4 à 8, **caractérisée en ce que** le tube d'enveloppe intérieur (33) et/ou le tube d'enveloppe extérieur (31) et le tube d'enveloppe intermédiaire (32) comprennent des butées longitudinales correspondantes (34, 35, 36), qui peuvent être mises en butée les unes contre les autres dans la direction de l'axe longitudinal.

10. Colonne de direction (1) selon l'une quelconque des revendications 4 à 9, **caractérisée en ce que** l'élément de verrouillage (71) est sollicité par ressort dans la position de blocage extérieur ou dans la position de blocage intérieur.
